# EUROPEAN PATENT SPECIFICATION

(11) **EP 4 108 073 B1**
(45) Date of publication and mention of the grant of the patent: **06.08.2025**
(21) Application number: 22180396.8
(22) Date of filing: 22.06.2022
(51) Int. Cl.: A01G 20/47, E01H 1/12, E01H 1/08

(54) **AXIAL FLOW BLOWER**
AXIALGEBLÄSE
VENTILATEUR À FLUX AXIAL

(30) Priority: 25.06.2021 JP 2021105509
(43) Date of publication of application: 28.12.2022
(73) Proprietor: Yamabiko Corporation, Ohme-shi, Tokyo 198-8760 (JP)
(72) Inventor: Takano, Masayuki, Tokyo, 198-8760 (JP); Kinoshita, Yuusuke, Tokyo, 198-8760 (JP)
(74) Representative: Kordel, Mattias

(56) References cited:
- EP-B1- 0 306 765
- US-A- 4 603 246
- US-A1- 2014 299 672
- US-B2- 9 737 182

## Description

### Technical Field

The present invention relates to an axial flow blower.

### Background Art

An axial flow blower (air blower) for blowing away fallen leaves and dust by ejection of a high speed air flow includes a housing including an air blowing passage, a motor case disposed in the air blowing passage, an electric motor (hereinafter simply referred to as a motor) housed in the motor case, and an air blowing fan coupled to a driving portion of the motor. Such an axial flow blower is configured to generate an air flow from a suction opening toward an ejection opening of the air blowing passage by rotating the air blowing fan with a driving force of the motor (see, for example, Patent Literature 1, as well as EP 0 306 765 B1, US 4 603 246 A, US 2014/299672 A1, US 9 737 182 B2).

Conventional axial flow blowers include the one in which a cylindrical or tubular blow-out pipe (also referred to as a blower nozzle, a blower pipe, or a blowing pipe, for example) extending in a front-rear direction (longitudinal direction) is attached to an opening of a housing, an opening (a distal opening) on the front side of the blow-out pipe forms an ejection opening, and the blow-out pipe tapers in a tapered shape (see, for example, Patent Literature 1, 2, and 3).

### Citation List

### Patent Literature

Patent Literature 1: JP 2020-076355 A
Patent Literature 2: JP 2019-152105 A
Patent Literature 3: US 2015/0143657 A

### SUMMARY

Generally, a motor-driven axial flow blower has a smaller air blowing force (flow speed) than that of a centrifugal blower. Thus, as described in Patent Literature 1, 2, and 3, the distal end of the blow-out pipe is tapered at a predetermined angle to narrow the wind passing through the inside of the blow-out pipe, thereby increasing a wind speed. With the above-mentioned tapered shape, however, while the axial flow blower has an increased wind speed, the volume of the wind that the axial flow blower can blow may decrease.

To avoid this, the wind volume may be increased by increasing the size of the air blowing fan or increasing the rotational speed of the motor, for example. However, increasing the size of the air blowing fan may increase the overall size of the blower. In addition, increasing the rotational speed of the motor may cause a louder operation sound of the blower, and this may unfortunately cause noise problems. Since the motor-driven blower has a smaller operation sound than that of an engine-driven blower, it is not desirable for the motor-driven blower to increase the rotational speed of the motor so as to increase the wind volume.

The present invention has been made in view of the foregoing, and provides an axial flow blower capable of effectively increasing a wind speed while suppressing decrease in a wind volume.

In order to solve the above problem, an axial flow blower according to the present invention includes a housing including a suction opening, an ejection opening, and an air blowing passage extending from the suction opening to the ejection opening, an electric motor disposed within the housing, and an air blowing fan coupled to the electric motor and rotated within the air blowing passage with a driving force of the electric motor so as to blow air from the suction opening toward the ejection opening. The housing is provided with a blow-out pipe that forms a portion of the air blowing passage extending in a direction along a rotation axis of the air blowing fan and has a distal end opening serving as the ejection opening. A distal end portion of the blow-out pipe is provided with an R part formed of an outwardly rounded arc.

According to the invention, the blow-out pipe is formed of a straight pipe.

According to the invention, the R part includes a first R part, and a second R part formed of an inwardly rounded arc formed across a perimeter of an end portion of the first R part is provided to be continuous with an end portion of the first R part.

According to the invention, the arc of the second R part has a radius smaller than that of the arc of the first R part.

According to the invention, a straight part having a constant diameter is provided to be continuous with an end portion of the second R part.

According to the invention, a ratio of a diameter of the straight part with respect to a diameter of the distal end portion of the blow-out pipe may be set within a range from 70% to 90%.

In yet another preferred aspect, a ratio of a radius of the arc of the first R part with respect to a diameter of the straight part may be set within a range from 10% to 30%.

In yet another preferred aspect, the distal end portion of the blow-out pipe may have a diameter of 90 mm, the arc of the first R part may have a radius of from 10 mm to 25 mm, and the arc of the second R part may have a radius smaller than 10 mm.

In further preferred aspect, a flow directing plate as a stationary blade that directs a flow of air blown forward by the air blowing fan may be disposed downstream of the air blowing fan as a moving blade, and the R part may be arranged downstream of the flow directing plate.

According to the present invention, it is possible to effectively increase a wind speed while suppressing decrease in a wind volume by providing an R part on a distal end portion of a blow-out pipe provided in a housing.

### BRIEF DESCRIPTION OF THE DRAWINGS

FIG. 1 is an overall perspective view showing an axial flow blower according to one embodiment of the present invention as seen from the upper side;
FIG. 2 is an overall perspective view showing the axial flow blower according to one embodiment of the present invention as seen from the lower side;
FIG. 3 is a vertical cross-sectional view showing a driving portion of the axial flow blower according to one embodiment of the present invention;
FIG. 4 is a vertical cross-sectional perspective view showing the driving portion of the axial flow blower according to one embodiment of the present invention;
FIG. 5 is an enlarged vertical cross-sectional view showing, in an enlarged manner, a distal end portion of a blow-out pipe of the axial flow blower according to one embodiment of the present invention; and
FIG. 6 is an enlarged vertical cross-sectional view used for illustrating an air flow around the distal end portion of the blow-out pipe shown in FIG. 5.

### DETAILED DESCRIPTION

Hereinafter, one embodiment of the present invention will be described in detail with reference to the drawings. In this specification, an air suction side (i.e., an operator side) will be referred to as a rear side or a proximal end side, and an air ejection side (i.e., a side opposite to the operator side) will be referred to as a front side or a distal end side. A side including a handle gripped by the operator will be referred to as an upper side, and a side opposite to this will be referred to as a lower side.

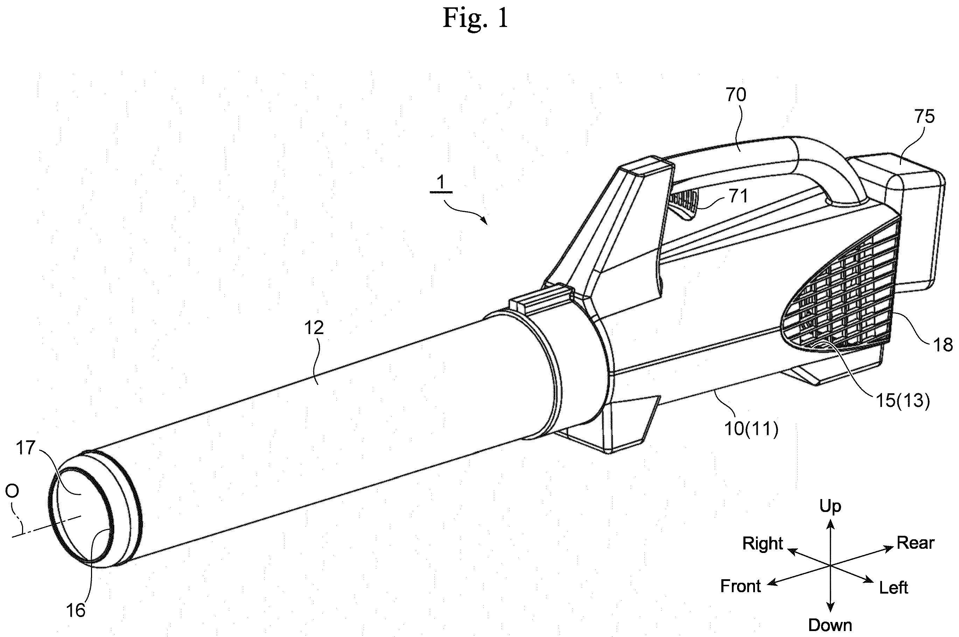

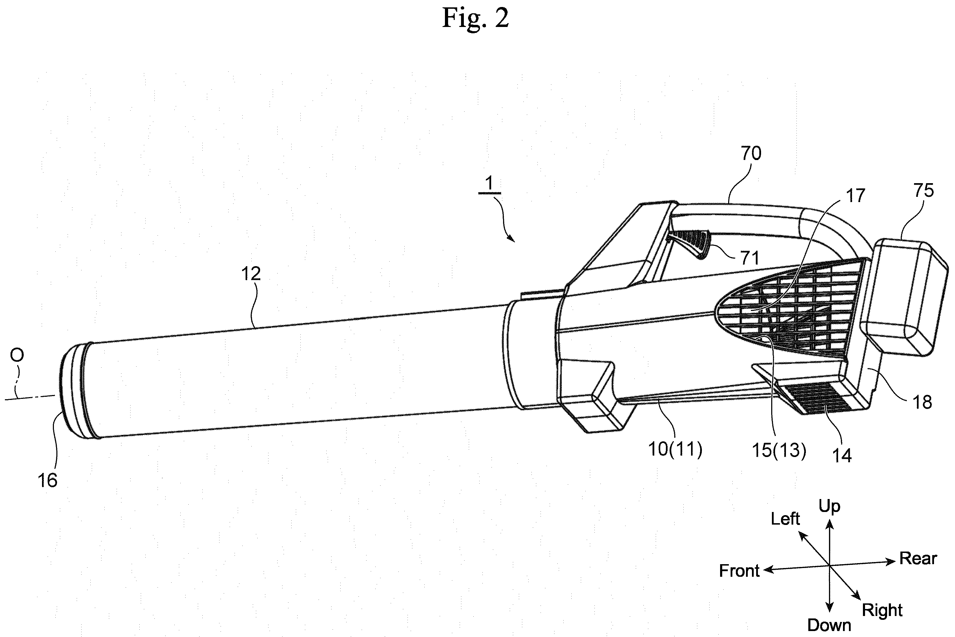

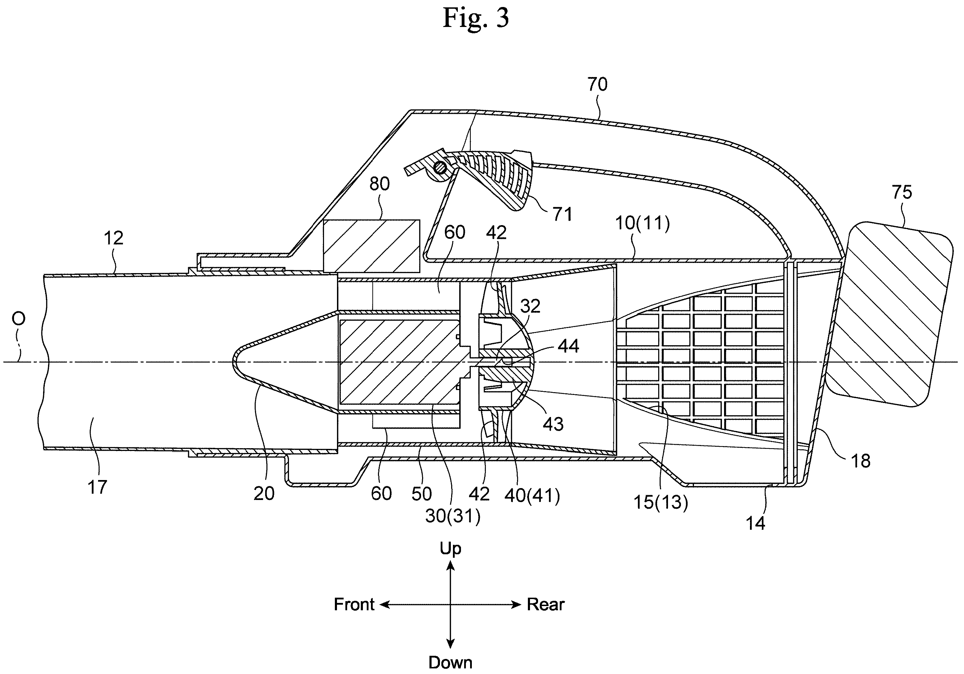

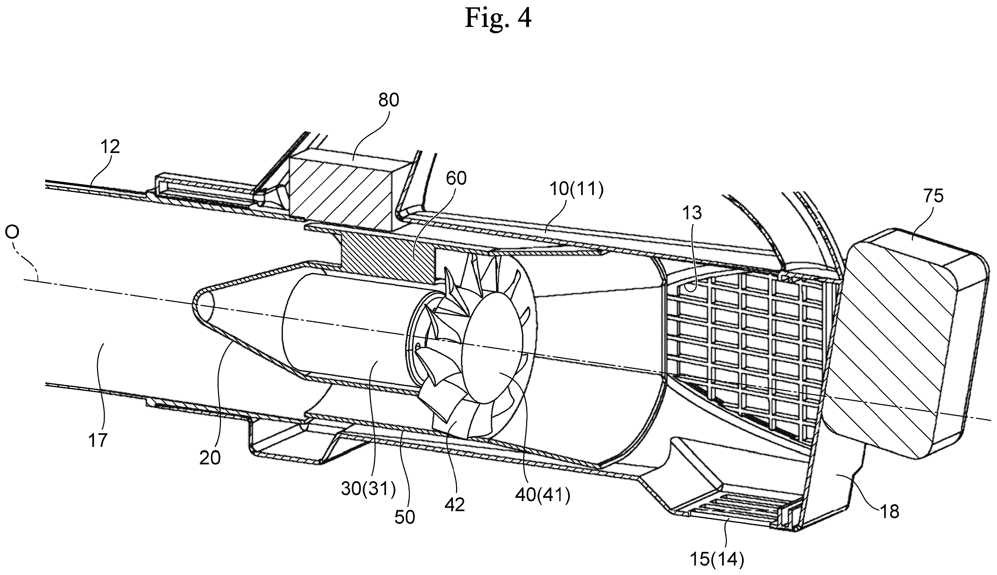

As shown in FIG. 1 and FIG. 2, an axial flow blower 1 of the present embodiment includes a housing 10 in which an air blowing passage 17 extending from a suction opening 15 to an ejection opening 16 is formed. As shown in FIG. 3 and FIG. 4, the housing 10 includes a motor case 20, an electric motor 30, an air blowing fan 40 coupled to the electric motor 30, and a flow directing plate 60 disposed in the air blowing passage 17.

By rotating the air blowing fan 40 within the air blowing passage 17 with a driving force of the electric motor 30, the axial flow blower 1 generates a high speed air flow from the suction opening 15 toward the ejection opening 16 and discharges the air flow to the outside from the ejection opening 16. The operator can blow away fallen leaves and dust by directing the air flow from the ejection opening 16 toward the ground while holding the axial flow blower 1.

The housing 10 includes a main body portion 11 and a blow-out pipe 12 that protrudes frontward from the main body portion 11.

The main body portion 11 is a resin tubular body or box body extending in the front-rear direction and having a front end face that is open. The right and left side surfaces and lower surface of the rear portion of the main body portion 11 each have the suction opening 15 having a plurality of slit holes. Hereinafter, the suction opening 15 formed on each of the right and left surfaces (side walls) of the rear portion of the main body portion 11, through which outside air (air) is introduced from the lateral side into the main body portion 11 (air blowing passage 17), may be referred to as a lateral suction opening 13, and the suction opening 15 formed on the bottom surface (bottom wall) of the rear portion of the main body portion 11, through which outside air (air) is introduced from the lower side into the main body portion 11 (air blowing passage 17), may be referred to as a lower suction opening 14. In the present embodiment, the rear end face of the main body portion 11 (i.e., the rear end portion of the air blowing passage 17) is closed by a rear wall 18 (without a suction opening) that is formed into a rectangular shape.

The blow-out pipe 12 is a resin cylindrical member (straight pipe) extending in the front-rear direction. The rear portion of the blow-out pipe 12 is inserted into and attached to the opening on the front side of the main body portion 11. The front portion of the blow-out pipe 12 protrudes frontward from the opening on the front side of the main body portion 11. The opening (distal opening) on the front side of the blow-out pipe 12 forms the ejection opening 16.

As shown in FIG. 3 and FIG. 4, an outer cylindrical body 50 is formed within the main body portion 11 at a central portion. The outer cylindrical body 50 is a resin cylindrical member extending in the front-rear direction. The front portion of the outer cylindrical body 50 extends straight in the front-rear direction (with a constant diameter in the front-rear direction), and is formed to have a slightly smaller diameter than that of the rear end portion (proximal end portion) of the blow-out pipe 12. The rear portion of the outer cylindrical body 50 is tapered to have a diameter gradually expanded from the front side toward the rear side. The rear end portion of the outer cylindrical body 50 is formed to have a slightly larger diameter than that of the rear end portion (proximal end portion) of the blow-out pipe 12.

The front edge portion (the opening on the front end face) of the outer cylindrical body 50 extends to the rear edge portion of the blow-out pipe 12. Further, the outer surface of the rear edge portion (the opening on the rear end face) of the outer cylindrical body 50 is in contact with the inner surface of the rear portion of the main body portion 11. That is, the outer cylindrical body 50 is disposed between the blow-out pipe 12 and the suction opening 15 formed in the rear portion of the main body portion 11.

Herein, the blow-out pipe 12 and the outer cylindrical body 50 are concentrically arranged such that the central axis of the blow-out pipe 12 matches with the central axis of the outer cylindrical body 50.

Thus, the air blowing passage 17 is defined by the internal space of the blow-out pipe 12, the outer cylindrical body 50, and the rear portion of the main body portion 11. The air blowing passage 17 is an air communication passage extending substantially straight in the front-rear direction from the suction opening 15 to the ejection opening 16.

The motor case 20 is a resin container disposed within the housing 10. The motor case 20 is a cylindrical member and is disposed in the central portion (on the rotation axis of the air blowing fan 40 described later) of the air blowing passage 17. The rear end face of the motor case 20 is open in a circular shape, and the front end portion of the motor case 20 is closed in a conical shape.

The motor case 20 is disposed in the central portion of the front portion of the outer cylindrical body 50. The front portion (conical portion) of the motor case 20 protrudes frontward of the front end face of the outer cylindrical body 50. As shown in FIG. 3 and FIG. 4, the motor case 20 is supported by a plurality of flow directing plates 60 in the central portion of the outer cylindrical body 50.

The flow directing plate 60 is provided between the inner surface of the front portion of the outer cylindrical body 50 and the outer surface of the motor case 20. The flow directing plate 60 is a rectangular plate-like member made of resin extending in a radial direction of the air blowing passage 17. The inner end portion of the flow directing plate 60 is connected to the outer peripheral surface of the motor case 20. Further, the outer end portion of the flow directing plate 60 is connected to the inner peripheral surface of the front portion of the outer cylindrical body 50. In other words, the flow directing plate 60 is a support member provided between the inner surface of the air blowing passage 17 and the outer surface of the motor case 20.

The flow directing plate 60 directs an air flow within the air blowing passage 17 (more specifically, an air flow downstream of the air blowing fan 40, blown forward by the air blowing fan 40 described later). This flow directing plate 60 is also referred to as a stationary blade. In the present embodiment, the plurality of (five in the illustrated example) flow directing plates 60 is disposed at regular intervals in a circumferential direction of the outer cylindrical body 50.

The motor case 20, the flow directing plates 60, and the outer cylindrical body 50 of the present embodiment are formed integrally as a unitary component. However, the motor case 20, the flow directing plates 60, and the outer cylindrical body 50 may be formed as separate components and assembled together.

As shown in FIG. 3 and FIG. 4, the electric motor 30 is an electrically-driven motor and is housed in the motor case 20. The electric motor 30 is disposed in the central portion (on the rotation axis of the air blowing fan 40 described later) of the air blowing passage 17 (the outer cylindrical body 50 and the motor case 20). The electric motor 30 is configured such that, with current supplied to a coil of the main body portion 31, a rotating shaft portion 32 provided in the main body portion 31 in a protruding manner rotates about an axis O.

The main body portion 31 is fixed within the motor case 20. In a state where the main body portion 31 is fixed within the motor case 20, the rotating shaft portion 32 protrudes rearward of the rear end face of the motor case 20.

The air blowing fan 40 is disposed behind the motor case 20, inside of the front portion of the outer cylindrical body 50. The air blowing fan 40 includes a coupling portion 41 and a plurality of blades 42.

The coupling portion 41 is a short cylindrical member, and is formed to have a diameter substantially equal to that of the motor case 20. The rear end face of the coupling portion 41 is closed by a spherical surface (i.e., in a dome shape), and the front end face of the coupling portion 41 is open in a circular shape. The central portion of the coupling portion 41 includes a boss 43, and the boss 43 includes an insertion hole 44 into which the rotating shaft portion 32 of the electric motor 30 is inserted. The coupling portion 41 is fixed to the rotating shaft portion 32 of the electric motor 30 by fitting the rotating shaft portion 32 of the electric motor 30 into the insertion hole 44 of the coupling portion 41.

In addition, while rotating relative to the motor case 20, the coupling portion 41 forms a portion of the motor case 20 as a rear case of the motor case 20.

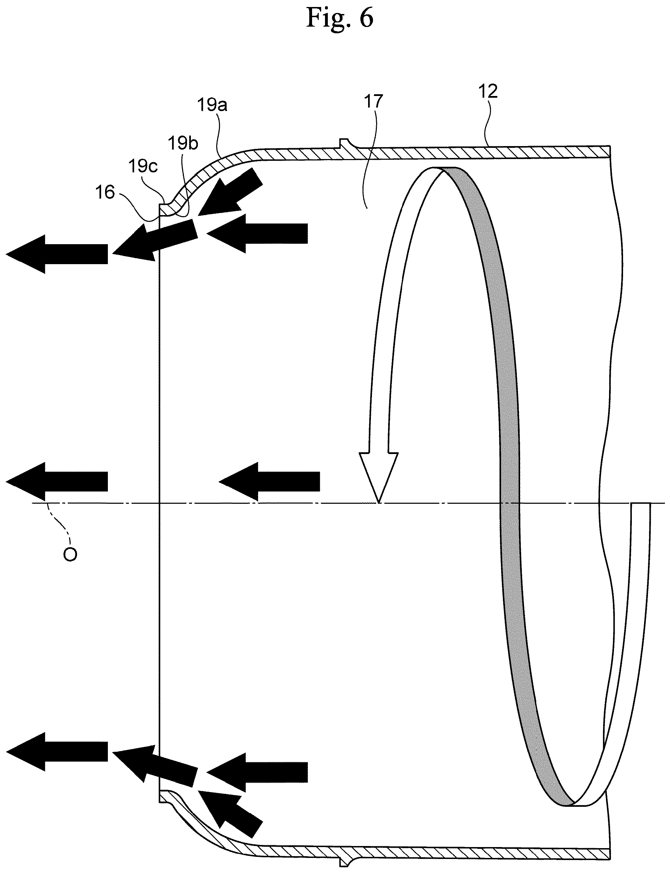

In the axial flow blower 1 of the present embodiment, the plurality of blades 42 is disposed (provided in a protruding manner) on the outer peripheral surface of the coupling portion 41. In the present embodiment, the plurality of (12 in the illustrated example) blades 42 is disposed at regular intervals in the circumferential direction of the coupling portion 41. Driving the electric motor 30 to rotate the rotating shaft portion 32 and the air blowing fan 40 about the axis O allows each of the blades 42 to blow air from the rear side (upstream side) toward the front side (downstream side) within the air blowing passage 17. That is, in the axial flow blower 1, as shown in FIG. 3 and FIG. 4, when the air blowing fan 40 is rotated within the air blowing passage 17 with a driving force of the electric motor 30, a high speed air flow is generated from the suction opening 15 on the upstream side toward the ejection opening 16 on the downstream side. The blade 42 of the air blowing fan 40 is also referred to as a moving blade. Specifically, as shown in FIG. 6, when the blades (moving blades) 42 of the air blowing fan 40 are rotated within the air blowing passage 17 with a driving force of the electric motor 30, the high speed air flow flowing downstream of the electric motor 30 flows while swirling through the inside of the cylindrical blow-out pipe 12.

In the present embodiment, the electric motor 30 (or the rotating shaft portion 32 thereof) and the air blowing fan 40 are disposed with the rotation axis O being along the front-rear direction, and thus the rotation axis O of the electric motor 30 (or the rotating shaft portion 32 thereof) and the air blowing fan 40 matches with the central axis of the blow-out pipe 12, the outer cylindrical body 50, and the motor case 20. The air blowing passage 17 defined by the blow-out pipe 12, the outer cylindrical body 50, and the like extends substantially straight in the direction along the rotation axis O of the air blowing fan 40.

In the axial flow blower 1, as shown in FIG. 1, FIG. 2, and FIG. 3, a handle 70 is provided on the upper surface of the main body portion 11. The handle 70 is a columnar member extending in the front-rear direction and is gripped by the operator. The front end portion and the rear end portion of the handle 70 are respectively coupled to the front portion and the rear end portion on the upper surface of the main body portion 11. The front portion of the handle 70 is provided with a throttle lever 71 serving as control means, with which the operator increases or decreases the rotational speed of the rotating shaft portion 32 of the electric motor 30 while gripping the handle 70.

A control case 80 is formed inside of the front end portion (a portion coupled to the main body portion 11) of the handle 70. The control case 80 houses a control unit (not shown) that controls driving of the electric motor 30, that is, rotation of the air blowing fan 40, based on a signal from the throttle lever 71. The control unit is connected to a power source cable (not shown) connected to a battery 75 as a power source. In addition, the control unit and the throttle lever 71 are connected to each other via a signal cable (not shown) provided within the handle 70. The control unit is connected to a power supply cable (not shown) connected to the electric motor 30.

As shown in FIG. 1, FIG. 2, and FIG. 3, in the axial flow blower 1, the battery 75 serving as a power source for the control unit and the like is mounted on the rear surface of the main body portion 11 (i.e., the upper portion of the rear wall 18 that forms the rear surface of the main body portion 11).

To blow away fallen leaves and dust with the axial flow blower 1, the operator grips the handle 70 with a hand to carry the axial flow blower 1. Then, the operator controls the throttle lever 71 of the handle 70 to rotate the air blowing fan 40 so as to generate a high speed air flow within the air blowing passage 17 and introduce outside air (air) (from the lateral and lower sides) from the suction openings 15 (the lateral suction openings 13 and the lower suction opening 14) into the air blowing passage 17, and directs the air flow from the ejection opening 16 toward the ground.

In addition to the above configuration, the axial flow blower 1 of the present embodiment is configured such that the front end portion (distal end portion) of the blow-out pipe 12 defining the front portion of the air blowing passage 17 is tapered with a corner R (R part) in order to increase a wind speed while suppressing decrease in a wind volume of the air flow directed toward the ground from the ejection opening 16.

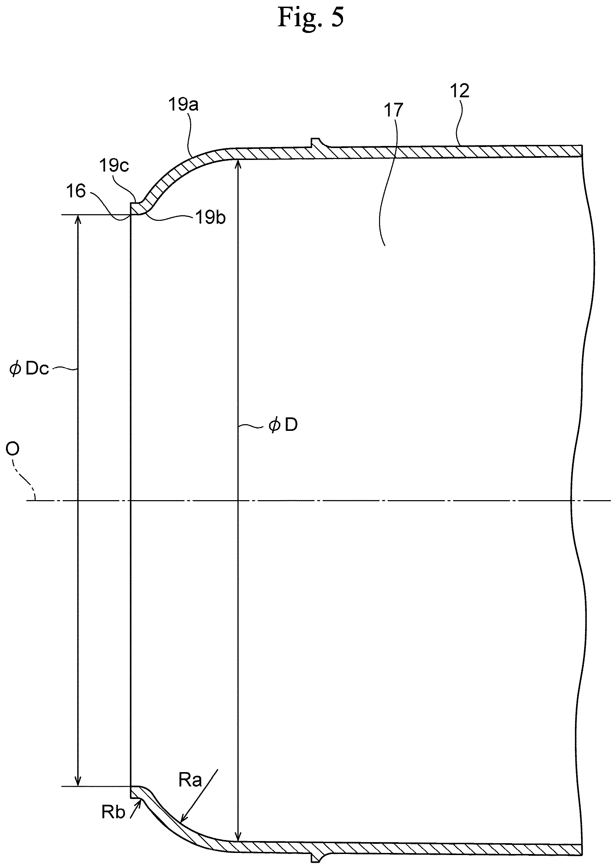

Specifically, as shown in FIG. 5 and FIG. 6, the opening on the front side of the cylindrical blow-out pipe 12, that is, the distal end portion (downstream end portion) of the blow-out pipe 12 is provided with an R part (first R part) 19a. The R part 19a is formed of an outwardly rounded arc formed across the perimeter of the distal end portion of the blow-out pipe 12.

In addition, an R part (second R part) 19b is provided to be continuous with the end portion (downstream end portion) of the R part (first R part) 19a. The R part 19b is formed of an inwardly rounded arc formed across the perimeter of the end portion of the R part 19a. In the present embodiment, the arc of the R part 19b on the front side has a radius smaller than that of the arc of the R part 19a on the rear side.

Furthermore, a straight part 19c is provided to be continuous with the end portion (downstream end portion) of the R part (second R part) 19b. The straight part 19c is a cylindrical part extending in the front-rear direction (with a constant diameter in the front-rear direction). In the present embodiment, the opening (distal opening) on the front side of the straight part 19c forms the ejection opening 16.

The R part 19a, the R part 19b, and the straight part 19c of the present embodiment are formed integrally with the blow-out pipe 12. However, the R part 19a, the R part 19b, and the straight part 19c may not be formed integrally with the blow-out pipe 12.

Providing the R part (first R part) 19a as described above prevents the air coming out of the ejection opening 16 from spreading in the circumferential direction of the blow-out pipe 12, and thus can increase a wind speed while suppressing decrease in a wind volume (see FIG. 6).

In addition, although the blow-out pipe 12 with an edged end may generate wind noise, the blow-out pipe 12 provided with the second R part 19b can blow wind by smoothly merging the wind flowing straight through the blow-out pipe 12 in the direction along the rotation axis O of the air blowing fan 40 and the wind guided to be slightly inclined inward by the first R part 19a at a position where the winds meet, and thus the noise can be effectively reduced.

Furthermore, providing the straight part 19c allows the wind blown out of the ejection opening 16 to maintain the straight flowing property, and thus the wind speed can more effectively be increased.

In the above-described configuration, the R part 19a, the R part 19b, and the straight part 19c may be set to have any dimensions. However, when the R part 19a and the R part 19b are too large in size, decrease in the wind volume may be larger. In contrast, when the R part 19a is too small in size, it will be difficult to obtain the effect of increasing the wind speed while suppressing decrease in the wind volume.

To balance decrease in the wind volume and increase in the wind speed, it is confirmed that it is preferable that a ratio (ϕDc/ϕD) of a diameter (inside diameter) ϕDc of the straight part 19c with respect to a diameter (inside diameter on the upstream side of the R part 19a) ϕD of the distal end portion of the blow-out pipe 12 be set within the range from 70% to 90% (i.e., not smaller than 70% and not larger than 90%). In addition, it is confirmed that it is preferable that a ratio (Ra/ϕDc) of a radius Ra of the arc of the first R part 19a with respect to a diameter (inside diameter) ϕDc of the straight part 19c be set within the range from 10% to 30% (i.e., not smaller than 10% and not larger than 30%). In other words, it is preferable that a ratio (Ra/ϕD) of the radius Ra of the arc of the first R part 19a with respect to the diameter ϕD of the distal end portion of the blow-out pipe 12 be set within the range from 7% to 27% (i.e., not smaller than 7% and not larger than 27%) and a ratio (Rb/ϕD) of a radius Rb of the arc of the second R part 19b with respect to the diameter ϕD of the distal end portion of the blow-out pipe 12 be set smaller than 15%.

In one example, when the distal end portion of the blow-out pipe 12 has a diameter (inside diameter on the upstream side of the R part 19a) ϕD of about 90 mm, it is preferable that the arc of the first R part 19a have a radius Ra of from 10 mm to 25 mm, and the arc of the second R part 19b have a radius smaller than 10 mm. In addition, it is preferable that the straight part 19c have a length of about 0.5 mm to 5.0 mm, but not limited thereto.

It should be noted that the blow-out pipe 12 need not include all of the R part 19a, the R part 19b, and the straight part 19c. The blow-out pipe 12 may include only the R part 19a or only the R part 19a and the R part 19b, for example. Further, the blow-out pipe 12 may include the straight part 19c to be continuous with the end portion (downstream end portion) of the R part 19a, without the R part 19b provided therebetween.

As described above, in the axial flow blower 1 of the present embodiment, the distal end portion of the blow-out pipe 12 formed of a straight pipe is provided with the R part (first R part) 19a formed of an outwardly rounded arc. This prevents the air coming out of the ejection opening 16 from spreading in the circumferential direction of the blow-out pipe 12, and thus can increase a wind speed while suppressing decrease in a wind volume (see FIG. 6).

In addition, the R part (second R part) 19b formed of an inwardly rounded arc is provided to be continuous with the end portion of the R part (first R part) 19a. With this configuration, although the blow-out pipe 12 with an edged end may generate wind noise, the blow-out pipe 12 provided with the second R part 19b can blow wind by smoothly merging the wind flowing straight through the blow-out pipe 12 in the direction along the rotation axis O of the air blowing fan 40 and the wind guided to be slightly inclined inward by the first R part 19a at a position where the winds meet, and thus the noise can be effectively reduced.

Further, the arc of the R part (second R part) 19b has a radius smaller than that of the arc of the R part (first R part) 19a. With this configuration, the noise can be effectively reduced with a relatively small change in shape.

Further, the straight part having a constant diameter is provided to be continuous with the end portion of the R part (second R part) 19b. With this configuration, providing the straight part 19c allows the wind blown out of the ejection opening 16 to maintain the straight flowing property, and thus the wind speed can more effectively be increased.

Further, the flow directing plate 60 as a stationary blade that directs the flow of air blown forward by the air blowing fan 40 is disposed downstream of the air blowing fan 40 as a moving blade, and the R part 19a is arranged downstream of the flow directing plate 60. With this configuration, the flow of air blown forward by the air blowing fan 40 (moving blade) is directed by the flow directing plate 60 (stationary blade), such that the flow of air guided by the tapered R part 19a can be more smoothly guided.

As described above, according to the axial flow blower 1 of the present embodiment, providing the R part 19a in the distal end portion of the blow-out pipe 12 provided in the housing 10 can effectively increase a wind speed while suppressing decrease in a wind volume.

Although one example of the embodiment of the present invention has been described above, the present invention is not limited thereto, and changes can be made appropriately within the scope of the appended claims.

For example, in the axial flow blower 1 of the present embodiment, the blow-out pipe 12, which is detachable, is attached to the opening of the main body portion 11. However, the blow-out pipe 12 may not necessarily be detachable, and may be formed integrally with the main body portion 11.

### DESCRIPTION OF SYMBOLS

- 1: Axial flow blower
- 10: Housing
- 11: Main body portion
- 12: Blow-out pipe
- 13: Lateral suction opening
- 14: Lower suction opening
- 15: Suction opening
- 16: Ejection opening
- 17: Air blow passage
- 18: Rear wall
- 19a: R part (first R part)
- 19b: R part (second R part)
- 19c: Straight part
- 20: Motor case
- 30: Electric motor
- 31: Main body portion
- 32: Rotating shaft portion
- 40: Air blowing fan (moving blade)
- 41: Coupling portion
- 42: Blade
- 43: Boss
- 44: Insertion hole
- 50: Outer cylindrical body
- 60: Flow directing plate (stationary blade)
- 70: Handle
- 71: Throttle lever
- 75: Battery
- 80: Control case

## Claims

1. An axial flow blower (1) for blowing away fallen leaves and dust comprising:
a housing (10) including a suction opening (15), an ejection opening (16), and an air blowing passage (17) extending from the suction opening (15) to the ejection opening (16);
an electric motor (30) disposed within the housing (10); and
an air blowing fan (40) coupled to the electric motor (30) and rotated within the air blowing passage (17) with a driving force of the electric motor (30) so as to blow air from the suction opening (15) toward the ejection opening (16),
wherein
the housing (10) is provided with a blow-out pipe (12) that forms a portion of the air blowing passage (17) extending in a direction along a rotation axis (O) of the air blowing fan (40) and has a distal end opening serving as the ejection opening (16), and the blow-out pipe (12) is formed of a straight pipe,
**characterized in that**
a distal end portion of the blow-out pipe (12) is provided with an R part (19a, 19b) formed of an outwardly rounded arc,
the R part (19a, 19b) includes a first R part (19a), and a second R part (19b) formed of an inwardly rounded arc formed across a perimeter of an end portion of the first R part (19a) is provided to be continuous with the end portion of the first R part (19a),
the arc of the second R part (19b) has a radius smaller than that of the arc of the first R part (19a),
a straight part (19c) having a constant diameter is provided to be continuous with an end portion of the second R part (19b), and
a ratio of a diameter of the straight part (19c) with respect to a diameter of the distal end portion of the blow-out pipe (12) is set within a range from 70% to 90%.

2. The axial flow blower (1) according to claim 1, wherein a ratio of the radius of the arc of the first R part (19a) with respect to the diameter of the straight part (19c) is set within a range from 10% to 30%.

3. The axial flow blower (1) according to claim 2, wherein the distal end portion of the blow-out pipe (12) has a diameter of 90 mm, the arc of the first R part (19a) has a radius of from 10 mm to 25 mm, and the arc of the second R part (19b) has a radius smaller than 10 mm.

4. The axial flow blower (1) according to any one of claims 1 to 3, wherein a flow directing plate (60) as a stationary blade that directs a flow of air blown forward by the air blowing fan (40) is disposed downstream of the air blowing fan (40) as a moving blade, and the R part (19a, 19b) is arranged downstream of the flow directing plate (60).

## Patentansprüche

1. Axialgebläse (1) zum Wegblasen von herabgefallenem Laub und Staub, umfassend:
ein Gehäuse (10) mit einer Ansaugöffnung (15), einer Austrittsöffnung (16) und einem Gebläsekanal (17), der sich von der Ansaugöffnung (15) zu der Austrittsöffnung (16) erstreckt;
einen in dem Gehäuse (10) angeordneten Elektromotor (30); und
einen luftblasenden Ventilator (40), der mit dem Elektromotor (30) gekoppelt ist und innerhalb des Gebläsekanals (17) mit einer Antriebskraft des Elektromotors (30) gedreht wird, um Luft von der Ansaugöffnung (15) in Richtung der Austrittsöffnung (16) zu blasen,
wobei
das Gehäuse (10) mit einem Ausblasrohr (12) versehen ist, das einen Abschnitt des Gebläsekanals (17) bildet, der sich in einer Richtung entlang einer Drehachse (O) des luftblasenden Ventilators (40) erstreckt und eine distale Endöffnung aufweist, die als die Austrittsöffnung (16) dient, und das Ausblasrohr (12) aus einem geraden Rohr gebildet ist,
**dadurch gekennzeichnet, dass**
ein distaler Endabschnitt des Ausblasrohrs (12) mit einem R-Teil (19a, 19b) versehen ist, das aus einem nach außen gerundeten Bogen gebildet ist,
der R-Teil (19a, 19b) einen ersten R-Teil (19a) umfasst, und ein zweiter R-Teil (19b), der aus einem nach innen gerundeten Bogen gebildet ist, der über einen Umfang eines Endabschnitts des ersten R-Teils (19a) gebildet ist, so vorgesehen ist, dass er mit dem Endabschnitt des ersten R-Teils (19a) durchgehend ist,
der Bogen des zweiten R-Teils (19b) einen kleineren Radius als der Bogen des ersten R-Teils (19a) aufweist,
ein gerader Teil (19c) mit einem konstanten Durchmesser vorgesehen ist, der mit einem Endabschnitt des zweiten R-Teils (19b) durchgehend ist, und
ein Verhältnis des Durchmessers des geraden Teils (19c) in Bezug auf den Durchmesser des distalen Endabschnitts des Ausblasrohrs (12) innerhalb eines Bereichs von 70% bis 90% liegt.

2. Axialgebläse (1) nach Anspruch 1, wobei ein Verhältnis des Radius des Bogens des ersten R-Teils (19a) in Bezug auf den Durchmesser des geraden Teils (19c) innerhalb eines Bereichs von 10% bis 30% liegt.

3. Axialgebläse (1) nach Anspruch 2, wobei der distale Endabschnitt des Ausblasrohrs (12) einen Durchmesser von 90 mm aufweist, der Bogen des ersten R-Teils (19a) einen Radius von 10 mm bis 25 mm aufweist und der Bogen des zweiten R-Teils (19b) einen Radius von weniger als 10 mm aufweist.

4. Axialgebläse (1) gemäß einem der Ansprüche 1 bis 3, wobei eine Strömungsleitplatte (60) als feststehendes Leitblech, das einen von dem luftblasenden Ventilator (40) nach vorne geblasenen Luftstrom leitet, stromabwärts des luftblasenden Ventilators (40) als bewegliches Leitblech angeordnet ist und der R-Teil (19a, 19b) stromabwärts der Strömungsleitplatte (60) angeordnet ist.

## Revendications

1. Souffleuse à flux axial (1) pour souffler des feuilles mortes et de la poussière, comprenant :
un carter (10) incluant une ouverture d'aspiration (15), une ouverture d'éjection (16), et un passage de soufflage d'air (17) s'étendant de l'ouverture d'aspiration (15) à l'ouverture d'éjection (16) ;
un moteur électrique (30) disposé au sein du carter (10) ; et
un ventilateur à air (40) accouplé au moteur électrique (30) et mis en rotation au sein du passage de soufflage d'air (17) avec une force d'entraînement du moteur électrique (30) de sorte à souffler de l'air à partir de l'ouverture d'aspiration (15) vers l'ouverture d'éjection (16),
dans laquelle
le carter (10) est pourvu d'un tuyau de soufflage (12) qui forme une portion du passage de soufflage d'air (17) s'étendant dans une direction le long d'un axe de rotation (O) du ventilateur à air (40) et a une ouverture d'extrémité distale servant d'ouverture d'éjection (16), et le tuyau de soufflage (12) est formé d'un tuyau droit,
**caractérisée en ce que**
une portion d'extrémité distale du tuyau de soufflage (12) est pourvue d'une partie R (19a, 19b) formée d'un arc arrondi vers l'extérieur,
la partie R (19a, 19b) inclut une première partie R (19a), et une deuxième partie R (19b) formée d'un arc arrondi vers l'intérieur formé sur un périmètre d'une portion d'extrémité de la première partie R (19a) est prévue pour être continue avec la portion d'extrémité de la première partie R (19a),
l'arc de la deuxième partie R (19b) a un rayon plus petit que celui de l'arc de la première partie R (19a),
une partie droite (19c) ayant un diamètre constant est prévue pour être continue avec une portion d'extrémité de la deuxième partie R (19b), et
un rapport d'un diamètre de la partie droite (19c) relativement à un diamètre de la portion d'extrémité distale du tuyau de soufflage (12) est fixé au sein d'une gamme allant de 70 % à 90 %.

2. Souffleuse à flux axial (1) selon la revendication 1, dans laquelle un rapport du rayon de l'arc de la première partie R (19a) relativement au diamètre de la partie droite (19c) est fixé au sein d'une gamme allant de 10 % à 30 %.

3. Souffleuse à flux axial (1) selon la revendication 2, dans laquelle la portion d'extrémité distale du tuyau de soufflage (12) a un diamètre de 90 mm, l'arc de la première partie R (19a) a un rayon allant de 10 mm à 25 mm, et l'arc de la deuxième partie R (19b) a un rayon inférieur à 10 mm.

4. Souffleuse à flux axial (1) selon l'une quelconque des revendications 1 à 3, dans laquelle une plaque de direction de flux (60) en tant que pale fixe qui dirige un flux d'air soufflé vers l'avant par le ventilateur à air (40) est disposée en aval du ventilateur à air (40) en tant que pale mobile, et la partie R (19a, 19b) est agencée en aval de la plaque de direction de flux (60).
